# FASCICULE DE BREVET EUROPEEN

(11) **EP 1 088 699 B1**
(45) Date de publication et mention de la délivrance du brevet: **02.07.2008**
(21) Numéro de dépôt: 00402620.9
(22) Date de dépôt: 21.09.2000
(51) Int. Cl.: B60P 3/00

(54) **Dispositif de transport de paquets de feuilles de verre**
Vorrichtung zum Transportieren von Glasscheibenpaketen
Device for the transport of glass sheet packages

(30) Priorité: 29.09.1999 FR 9912174
(43) Date de publication de la demande: 04.04.2001
(73) Titulaire: Nicolas Industrie, 89290 Champs sur Yonne (FR)
(72) Inventeur: Amichault, Jean-Claude, 89270 Saint More (FR)
(74) Mandataire: Loisel, Bertrand

(56) Documents cités:
- DE-A- 4 432 785
- FR-A- 2 581 603
- US-A- 5 114 288

## Description

La présente invention concerne les dispositifs de transport de paquets de feuilles de verre sur des véhicules, généralement routiers.

Classiquement, on transporte les paquets de feuilles de verre de grande dimension sur chant, en les appuyant sur une face inclinée d'un bâti qui peut notamment être un chevalet placé dans le plan longitudinal médian du véhicule de transport. Cette disposition permet notamment de constituer le paquet ou les paquets de feuilles sur un chevalet monté sur un socle, puis d'amener l'ensemble dans une remorque ou semi-remorque ayant une suspension de hauteur variable en déplaçant la remorque pour amener des rebords inférieurs qu'elle présente sous le chevalet. Ensuite on remonte la suspension pour faire supporter le chevalet par les rebords. Le document EP-A-0084 858 décrit un type particulier de chevalet utilisable pour ce mode de transport.

Le paquet ou chaque paquet porté par un chevalet doit être maintenu appliqué sur ce dernier. Il est avantageux d'utiliser des presseurs déplaçables vers les paquets et à partir des paquets par des vérins portés par la structure du véhicule. On trouvera des exemples de tels dispositifs de pressage dans les documents U.S. 3 939 780 et FR 2 581 603.

Les dispositions connues donnent des résultats satisfaisants lorsque toutes les feuilles des paquets à transporter ont la même largeur et lorsque l'épaisseur des paquets ne s'écarte pas trop d'une valeur nominale. En revanche, ces dispositifs se prêtent mal au transport de charges dont les caractéristiques peuvent varier de façon considérable. En effet, il faut alors apporter des modifications à la cinématique du dispositif de pressage, soit l'efficacité du dispositif dépend de l'épaisseur du paquet.

La présente invention propose notamment un dispositif de transport de paquets de feuilles de verre comprenant :
- un bâti présentant au moins une surface d'appui inclinée destinée à recevoir un paquet de feuilles de verre posées sur chant, et
- un véhicule de transport du bâti dont une face latérale au moins porte un dispositif de pressage du paquet correspondant contre la face d'appui, ledit dispositif comportant des patins d'appui et au moins un vérin de déplacement des patins par l'intermédiaire d'un mécanisme articulé,
caractérisé en ce que le mécanisme articulé comprend au moins un premier bras articulé sur le véhicule autour d'un axe longitudinal et portant au moins un des patins à son extrémité inférieure, un second bras également articulé sur le châssis autour d'un axe longitudinal et portant à son extrémité supérieure, placée au-dessus du premier bras, au moins un autre patin, le vérin à commande par fluide étant interposé entre les deux bras.

Dans un mode avantageux de réalisation, le second bras est relié au véhicule par des moyens de rappel élastique, généralement un ou des ressorts, qui tendent à le déplacer dans un sens tel que le patin porté par le second bras s'écarte du bâti. Le vérin est alors susceptible de développer un couple supérieur à celui exercé par les ressorts sur le second bras, de sorte que la mise en action du vérin provoque d'abord le déplacement du premier bras vers le bâti, puis, une fois le patin de ce premier levier en appui et une fois que la force exercée par le vérin est suffisante, le déplacement du second bras. Une clavette peut être prévue pour immobiliser le second bras dans une position où son patin reste écarté du bâti, notamment en vue du transport de paquets de feuilles de faible largeur.

En général, on utilisera un vérin pneumatique ou hydrauliqueà double effet, ce qui permet de se dispenser de moyens élastiques de rappel du premier bras.

La cinématique de déplacement du premier levier est avantageusement telle que le patin porté par ce bras ait un déplacement final qui est légèrement de bas en haut, ceci afin de combattre la tendance naturelle du pied du paquet de feuilles de s'écarter du bâti, du fait de la composante horizontale de force créée par l'appui incliné.

Un tel dispositif a une constitution relativement simple, puisqu'un seul vérin suffit à actionner deux bras ou leviers. La cinématique est telle que le dispositif peut serrer des paquets d'épaisseur différente avec une efficacité qui n'est que très peu fonction de l'épaisseur du paquet.

L'invention porte également sur le véhicule de transport en lui-même, équipé pour recevoir un bâti.

Les caractéristiques ci-dessus ainsi que d'autres apparaîtront mieux à la lecture de la description qui suit de modes particuliers de réalisation donnés à titre d'exemples non limitatifs.

La description se réfère aux dessins qui l'accompagnent, dans lesquels :
- la figure 1 est une représentation simplifiée d'un dispositif de transport portant un chevalet à deux faces inclinées, en coupe suivant un plan transversal à l'axe longitudinal du véhicule, le dispositif de pressage placé à droite étant représenté dans une position d'appui des patins sur un paquet de feuilles de verre et le dispositif placé à gauche étant représenté dans une disposition où il libère le paquet correspondant.
- la figure 2 montre une disposition prise par le dispositif de la figure 1 lorsque l'un des paquets de verre transporté est constitué de feuilles de faible largeur,
- la figure 3 montre un dispositif de transport dont le bâti présente une seule face d'appui,
- la figure 4 est une vue de détail à grande échelle d'un des dispositifs de pressage des figures 1 à 3.

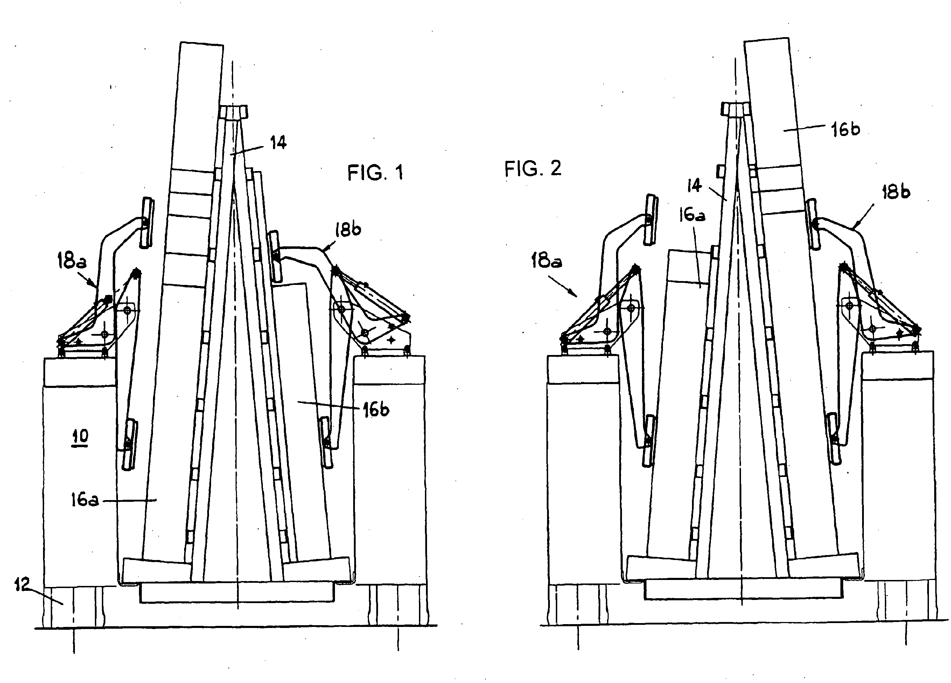

Le dispositif montré en figure 1 a une constitution symétrique . Il comporte un véhicule de transport dont seuls sont représentés une fraction du châssis 10 et un couple de roues 12. Les roues seront généralement reliées au véhicule par une suspension de hauteur réglable de façon à permettre un chargement facile d'un bâti 14 en forme de chevalet symétrique. Ce chevalet a une constitution classique et pour cette raison il n'est pas nécessaire de le décrire en détail. Il présente deux faces inclinées aptes à recevoir chacune un paquets de feuilles de verre 16a ou 16b qui reposent sur un socle 18 appartenant au chevalet.

Le châssis 10 porte, de chaque côté du bâti, un dispositif de pressage 18a ou 18b pouvant être amené dans les dispositions montrées respectivement à gauche et à droite sur la figure 1. Dans la pratique, deux ou trois dispositifs seront alignés pour que le véhicule puisse recevoir des feuilles de longueur variable et pour que loe pressage soir régulier tout le long des feuilles les plus longues.

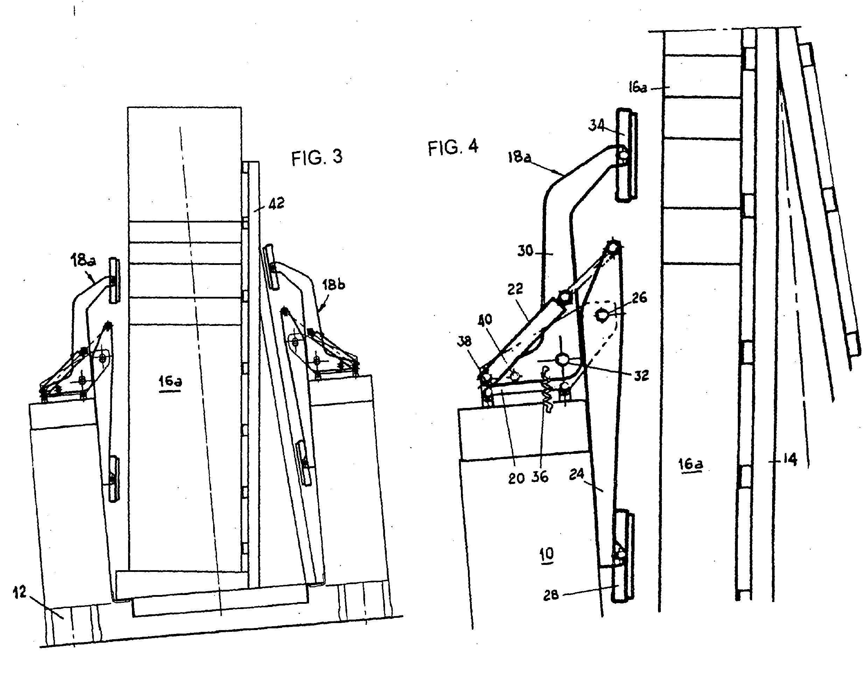

Chacun des dispositifs a la constitution montrée en détail sur la figure 4. Il comporte une équerre 20 fixée sur une poutre appartenant au châssis 10 et un mécanisme articulé sur le châssis et actionné par un vérin à double effet 22.

Le mécanisme comporte un premier bras ou bras inférieur 24 qui tourne sur l'équerre autour d'un axe 26 parallèle à l'axe longitudinal du véhicule , est relié à la tige du vérin 22 à son extrémité supérieure et porte un patin de pressage 28 à son extrémité basse . Le patin est relié au bras 24 par un joint lui permettant de s'orienter afin d'assurer un appui satisfaisant sur le verre. On utilisera en général un patin de deux à quatre mètres de long, suivant le nombre de dispositifs alignés, présentant un face avant recouverte d'élastomère et relié au bras par un bloc d'élastomère constituant une rotule à débattement limité.

Le second bras 30 ou bras supérieur présente une forme en S. Il est également articulé sur l'équerre 20, autour d'un axe 32 parallèle à l'axe 26. L'extrémité haute du bras 30 porte un patin 34 de constitution similaire à celle du patin 28. La partie terminale coudée du second bras 30 est reliée au châssis 10 par des moyens élastiques de rappel qui tendent à écarter le patin 34 du chevalet. Ces moyens élastiques seront généralement constitués par des ressorts hélicoïdaux 36 montés entre une poutre du châssis 10 et un point du levier 30 proche de l'axe 32. Le corps du vérin 22 est articulé à l'extrémité de la partie inférieure coude du bras 30, par un axe 38.

Le fonctionnement du dispositif de pressage est le suivant. Au repos, le dispositif présente la disposition montrée à droite sur la figure 1 et sur la figure 4. Le ressort ou les ressorts 36 tendent à ramener le bras 30 dans cette disposition. Le bras 24 tend également à revenir dans la disposition illustrée par l'effet des forces de gravité. Le vérin 22, s'il est à double effet, permet également d'amener les bras dans cette disposition, en alimentant en huile ou en air le compartiment qui tend à provoquer le déploiement du vérin.

Lorsque le dispositif de pressage doit être actionné pour maintenir un paquet de feuilles de verre sur le chevalet 14, le compartiment du vérin 22 qui tend à rétracter la tige est mise en pression. Le vérin tire d'abord sur le bras 24 et l'amène dans la position montrée à droite sur la figure 1. En effet, le ressort 36 retient le bras 30. Le patin 28 vient en contact avec le paquet 16a et s'oriente convenablement grâce à son articulation. La pression peut ensuite augmenter dans le vérin 22 jusqu'à surmonter l'effort de rappel du ressort ou des ressorts 36. Le bras 30 tourne alors dans le sens des aiguilles d'une montre sur la figure 1 ou 4 jusqu'à ce que le patin 34 soit également en contact avec le paquet de verre. Un limiteur de pression prétaré à une valeur déterminée permet de maintenir ensuite la pression appropriée.

Un tel dispositif permet de maintenir des paquets de verre de largeur différente. Il suffit que le premier bras 24 soit prévu de façon que le patin vienne s'appliquer approximativement à mi-hauteur des feuilles les moins larges prévues. Lorsque le paquet comprend des feuilles de grande largeur et des feuilles de faible largeur, comme représenté à droite sur la figure 1, l'ensemble du paquet est maintenu par l'appui des patins inférieurs et par l'appui du patin supérieur directement sur les feuilles de grande largeur.

Lorsque le dispositif de transport doit être prévu pour permettre également de transporter des paquets constitués uniquement de feuilles de faible largeur, le dispositif de pressage peut comporter un passage ménagé dans le second bras 30 et dans l'équerre de façon à y insérer une clavette 40 de verrouillage du premier bras dans une position où il est écarté du chevalet. Une telle disposition est montrée en figure 2.

Le dispositif de transport peut également recevoir un bâti ayant une seule face d'appui. La figure 3 montre un tel bâti 42. Ce bâti peut s'appuyer sur un des dispositifs de pressage, 18b par exemple, maintenu en position rétractée tandis que notre dispositif 18a vient plaquer le paquet de feuilles de verre 16a contre la face de réception du bâti.

## Revendications

1. Dispositif de transport de paquets de feuilles de verre comprenant :
- un bâti (14) présentant au moins une surface d'appui inclinée destinée à recevoir un paquet de feuilles de verre posées sur chant, et
- un véhicule de transport du bâti dont au moins une face latérale porte au moins un dispositif (18a, 18b) de pressage du paquet correspondant contre La face d'appui, ledit dispositif comportant des patins d'appui (28, 34) et au moins un vérin (22) de déplacement des patins par l'intermédiaire d'un mécanisme articulé,
**caractérisé en ce que** le mécanisme articulé comprend au moins un premier bras (24) articulé sur le véhicule autour d'un axe longitudinal et portant au moins un des patins (28) à son extrémité inférieure, un second bras (30) également articulé sur le châssis autour d'un axe longitudinal et portant à son extrémité supérieure, placée au-dessus du premier bras, au moins un autre patin (34), le vérin (22) à commande par fluide étant interposé entre les deux bras.

2. Dispositif suivant la revendication 1, **caractérisé en ce que** le second bras (30) est relié au véhicule par des moyens de rappel élastique (36) généralement un ou des ressorts, qui tendent à déplacer le second bras dans un sens tel que le patin porté par le second bras s'écarte du bâti.

3. Dispositif suivant la revendication 2, **caractérisé en ce que** le vérin (22) est prévu pour développer un couple supérieur à celui exercé par les ressorts sur le second bras (30), de sorte que la mise en action du vérin provoque d'abord le déplacement du premier bras (24) vers le bâti, puis, une fois le patin (28) de ce premier bras en appui et une fois que la force exercée par le vérin est suffisante, le déplacement du second bras (30).

4. Dispositif suivant la revendication 1, 2 ou 3, **caractérisé en ce qu'**il comporte une clavette (40) prévue pour immobiliser le second bras (30) dans une position où son patin reste écarté du bâti.

5. Dispositif suivant l'une quelconque des revendications précédentes, **caractérisé en ce que** le vérin (22) est pneumatique ou hydraulique, à double effet.

## Claims

1. Device for transporting sets of sheets of glass, comprising:
- a frame (14) which has at least one inclined support surface which is designed to receive a set of sheets of glass placed edgewise, and
- a vehicle for transporting the frame, of which at least one lateral surface supports at least one device (18a, 18b) for pressing the corresponding set against the support surface, the said device comprising support blocks (28, 34) and at least one jack (22) for displacement of the blocks by means of an articulated mechanism,
**characterised in that** the articulated mechanism comprises at least one first arm (24) which is articulated on the vehicle around a longitudinal axis, and supports at least one of the blocks (28) at its lower end, and a second arm (30), which is also articulated on the chassis around a longitudinal axis and supports at its upper end, placed above the first arm, at least one other block (34), the jack (22) which is controlled by fluid being interposed between the two arms.

2. Device according to claim 1, **characterised in that** the second arm (30) is connected to the vehicle by resilient return means (36), generally consisting of one or more springs, which tend to displace the second arm in a direction such that the block which is supported by the second arm is spaced from the frame.

3. Device according to claim 2, **characterised in that** the jack (22) is designed to develop moment greater than that exerted by the springs on the second arm (30), such that the actuation of the jack gives rise firstly to the displacement of the first arm (24) towards the frame, then, once the block (28) of this first arm is supported, and once the force exerted by the jack is sufficient, it gives rise to displacement of the second arm (30).

4. Device according to claim 1, 2 or 3, **characterised in that** it comprises a wedge (40) which is designed to immobilise the second arm (30) in a position in which its block remains spaced from the frame.

5. Device according to any one of the preceding claims, **characterised in that** the jack (22) is of the pneumatic or hydraulic double-effect type.

## Patentansprüche

1. Vorrichtung zum Transport von Glasscheibenpaketen, umfassend
- Ein Gestell (14), welches wenigstens eine geneigte Auflageoberfläche aufweist, die dazu vorgesehen ist, ein Paket aus hochkant gestellten Glasscheiben aufzunehmen, und
- Ein Transportfahrzeug für das Gestell, bei dem wenigstens eine seitliche Fläche wenigstens eine Vorrichtung (18a, 18b) trägt, um das entsprechende Paket gegen die Auflagefläche zu drücken, wobei diese Vorrichtung Auflageklötze (28, 34) und wenigstens einen Zylinder (22) zum Verfahren der Klötze vermittels eines Gelenkmechanismus umfasst,
**dadurch gekennzeichnet, dass** der Gelenkmechanismus wenigstens einen ersten Arm (24) umfasst, der auf dem Fahrzeug um eine Längsachse drehbar gelagert ist und der an seinem unteren Ende wenigstens einen der Klötze (28) trägt, und einen zweiten Arm (30) umfasst, der ebenfalls auf dem Gehäuse um eine Längsachse drehbar gelagert ist und der an seinem oberen Ende, positioniert oberhalb des ersten Armes, wenigstens einen anderen Klotz (34) trägt, wobei der flüssigkeitsgesteuerte Zylinder (22) zwischen den beiden Armen angebracht ist.

2. Vorrichtung nach Anspruch 1, **dadurch gekennzeichnet, dass** der zweite Arm (30) über elastische Rückstellmittel (36) mit dem Fahrzeug verbunden ist, im Allgemeinen eine Feder oder Federn, die die Tendenz haben, den zweiten Arm in eine Richtung zu bewegen, so dass der Klotz, der vom zweiten Arm getragen wird, sich vom Gestell wegbewegt.

3. Vorrichtung nach Anspruch 2, **dadurch gekennzeichnet, dass** der Zylinder (22) dafür vorgesehen ist, eine stärkeres Drehmoment zu entwickeln, als das, welches von den Federn auf den zweiten Arm (30) ausgeübt wird, so dass der Einsatz des Zylinders zuerst das Verfahren des ersten Armes (24) zum Gestell hin bewirkt, dann sobald der Klotz (28) des ersten Armes aufliegt und die vom Zylinder ausgeübte Kraft ausreicht, das Verfahren des zweiten Arms (30).

4. Vorrichtung nach Anspruch 1, 2 oder 3, **dadurch gekennzeichnet, dass** sie einen Keil (40) umfasst, der dazu vorgesehen ist, den zweiten Arm (30) in einer Position zu fixieren, in der sein Klotz vom Gestell wegsteht.

5. Vorrichtung nach einem der vorhergehenden Ansprüche, **dadurch gekennzeichnet, dass** der Zylinder (22) ein doppeltwirkender, pneumatischer oder hydraulischer Zylinder ist.
